# EUROPÄISCHE PATENTSCHRIFT

(11) **EP 0 745 498 B1**
(45) Veröffentlichungstag und Bekanntmachung des Hinweises auf die Patenterteilung: **27.01.1999**
(21) Anmeldenummer: 96105324.6
(22) Anmeldetag: 03.04.1996
(51) Int. Cl.: B60J 3/02

(54) **Sonnenblende für Fahrzeuge**
Sun-visor for vehicles
Pare-soleil pour véhicules

(30) Priorität: 31.05.1995 DE 19519913
(43) Veröffentlichungstag der Anmeldung: 04.12.1996
(73) Patentinhaber: Johnson Controls Interiors GmbH, 42285 Wuppertal (DE)
(72) Erfinder: Viertel, Lothar, 66802 Altforweileer (DE)

(56) Entgegenhaltungen:
- EP-A- 0 117 951
- EP-A- 0 450 044
- DE-A- 2 631 712
- DE-A- 4 031 482
- FR-A- 2 318 046
- US-A- 4 227 242
- US-A- 4 421 355
- US-A- 4 586 788
- US-A- 4 652 982
- PATENT ABSTRACTS OF JAPAN vol. 10, no. 11 (E-374), 17.Januar 1986 & JP-A-60 174578 (MATSUSHITA DENKI SANGYO), 7.September 1985,

## Beschreibung

Die Erfindung bezieht sich auf eine Sonnenblende für Fahrzeuge mit einem Sonnenblendenkörper, einer Ausnehmung in einer Breitseite des Sonnenblendenkörpers, einer in der Ausnehmung angeordneten, mindestens zwei Lichtquellen aufweisenden Beleuchtungseinrichtung, einem die Beleuchtungseinrichtung abdeckenden Spiegel, einem den Spiegel haltenden Rahmen aus lichtdurchlässigem Material, einem Schieber zum Abdecken oder Freigeben des Spiegels und Schaltmitteln zum Ein- oder Ausschalten der Lichtquellen, die durch Verschieben des Schiebers betätigbar sind.

In der DE 40 31 482 A1 ist eine gattungsgemäße Sonnenblende gezeigt. Bei dieser bekannten Sonnenblende wird durch Verschieben des Schiebers der Kontaktfühler eines Mikroschalters betätigt. Der Mikroschalter arbeitet mit dem Schieber so zusammen, daß der Stromkreis für die Beleuchtungseinrichtung geschlossen ist, wenn sich der Schieber in seiner geöffneten Position befindet bzw. unterbrochen ist, wenn der Schieber sich in seiner den Spiegel abdeckenden Lage befindet. Nachteilig hierbei ist, daß nach dem Einschalten der Lichtquellen deren Licht unmittelbar in voller Endleistung aufleuchtet. Aus Verbraucherkreisen wurde bekannt, daß dieses unmittelbare, volle Aufleuchten der Lichtquellen abgelehnt wird, weil es oftmals, insbesondere nach längerer Fahrt in der Dunkelheit, zur Blendung führt und daher als unangenehm empfunden wird.

Durch die DE 26 31 712 A1 ist eine weitere mit elektrischen Lichtquellen versehene Sonnenblende bekanntgeworden, bei der eine manuelle Lichtstärkensteuerung vorgesehen ist. Je nach Schalterstellung kann aber auch bei dieser bekannten Sonnenblende nach dem Einschalten der Lichtquellen deren Licht unmittelbar mit voller Endleistung aufleuchten, so daß die vorerwähnten Nachteile auch bei dieser bekannten Sonnenblende eintreten können.

In der US-A-4 227 242 oder auch US-A-4 586 788 ist eine Sonnenblende mit einem Spiegel und mit einer Beleuchtungseinrichtung für den Spiegel gezeigt. Die Beleuchtungseinrichtung umfaßt ein erstes Paar von Lichtquellen und ein zweites Paar von Lichtquellen. Zum Ein- und Ausschalten der Lichtquellen dienen Schaltmittel, die mit einer als Klappdeckel ausgebildeten Spiegelabdeckung zusammenwirken. Dabei ist die Anordnung so getroffen, daß beim Öffnen der Spiegelabdeckung zunächst ein erstes Paar der Lichtquellen eingeschaltet und durch weiteres Öffnen der Spiegelabdeckung auch das zweite Paar der Lichtquellen eingeschaltet wird.

Der vorliegenden Erfindung liegt nun die Aufgabe zugrunde, eine Sonnenblende der eingangs genannten Art so zu verbessern, daß die darin installierten Lichtquellen nach dem Einschalten einerseits keine Blendungsgefahr mehr begründen und andererseits in der Lichtleistung ausreichend sind.

Erfindungsgemäß wird diese Aufgabe dadurch gelöst, daß zum Ein- und Ausschalten der Lichtquellen erste und zweite Schaltmittel vorgesehen sind, wobei die ersten Schaltmittel aus einem Schalter zum Schließen eines ersten Schaltkreises, bei dem die Lichtquellen hintereinander geschaltet sind, bestehen und die zweiten Schaltmittel aus zwei zusätzlichen Schaltern zum Schließen eines zweiten Schaltkreises, bei dem die Lichtquellen parallel geschaltet sind, bestehen und wobei die Schalter so angeordnet sind, daß durch Verschieben des Schiebers von der den Spiegel abdeckenden in die den Spiegel freigebenden Lage zunächst der erste Schalter betätigbar ist und durch weiteres Verschieben des Schiebers in die den Spiegel freigebende Lage auch die weiteren Schalter betätigbar sind.

Beim Öffnen des Schiebers werden dadurch zwar die Lichtquellen eingeschaltet, jedoch zunächst mit schwacher Helligkeit, an die sich die Augen rasch gewöhnen. Erst durch weiteres Öffnen des Schiebers bis in seine geöffnete Endstellung wird die volle Helligkeit erzielt, die aber - wie Versuche gezeigt haben - keine Blendung mehr verursacht. Für die erfindungsgemäße Sonnenblende ergibt sich somit eine High-Low-Lichteinstellung mit besonders einfachen und kostengünstigen Mitteln.

Ein Ausführungsbeispiel der Erfindung wird nachfolgend anhand der Zeichnung näher erläutert, und es zeigen:
- Fig. 1: eine Ansicht einer Sonnenblende,

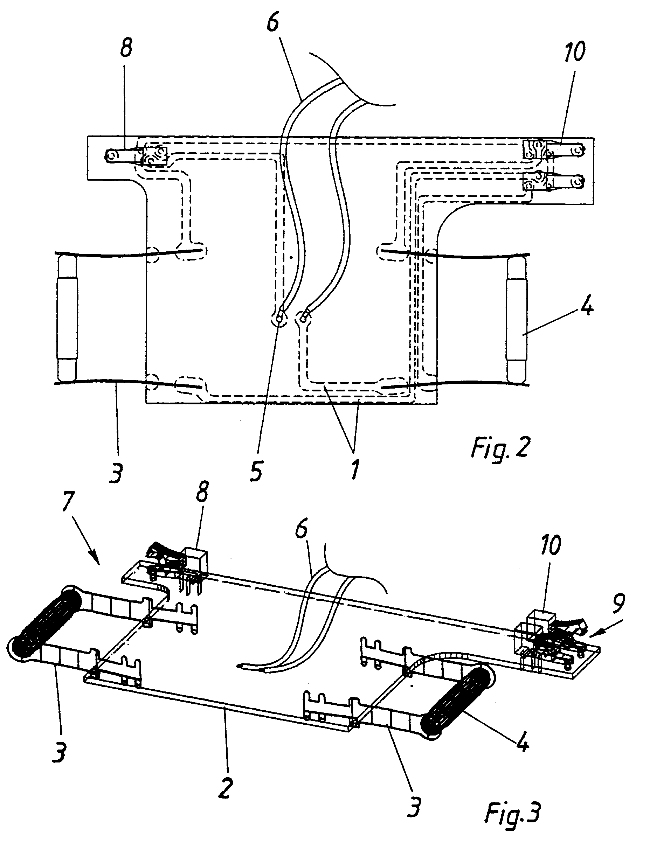

- Fig. 2: eine vergrößerte Ansicht der in Fig. 1 gezeigten Leiterplatte,
- Fig. 3: die Leiterplatte nach Fig. 1 und 2 ohne Schaltkreise und
- Fig. 4: das Schaltbild bei völlig geöffnetem Schieber.

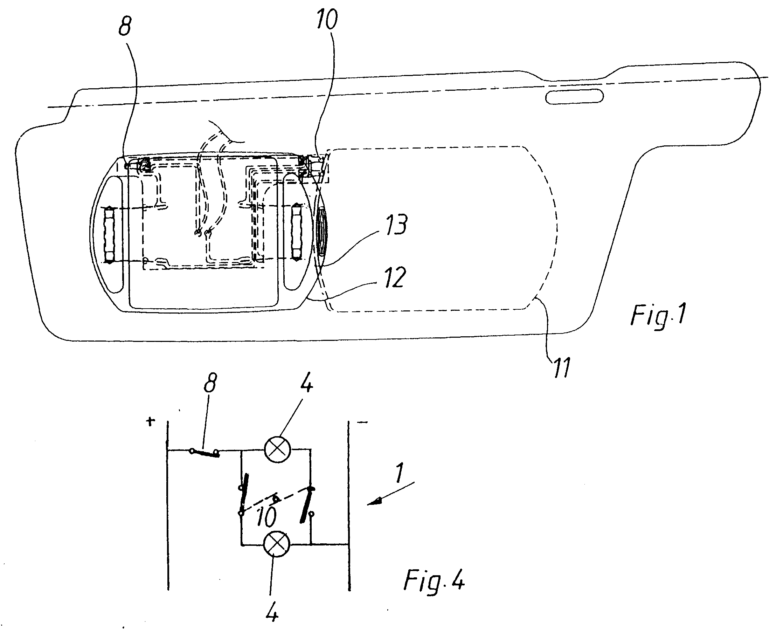

Die neue Sonnenblende weist einen in Fig. 1 gezeigten Sonnenblendenkörper mit einer Ausnehmung in einer Breitseite auf. In der Ausnehmung ist eine mindestens zwei Lichtquellen umfassende Beleuchtungseinrichtung angeordnet. Die Beleuchtungsanordnung wird durch einen nicht dargestellten Spiegel abgedeckt, der von einem lichtdurchlässigen Rahmen, der ebenfalls nicht dargestellt ist gehalten wird. Ein Schieber 11 dient zum Abdecken oder zum Freigeben des Spiegels und zum Betätigen von Schaltmitteln zum Ein- oder Ausschalten der Lichtquellen.

Wie dargestellt, kann der Schaltkreis 1 z.B. auf einer Leiterplatte 2 angeordnet sein, an der auch links und rechts Soffittenhalter 3 integriert sind, die darin eingeklemmte Soffitten 4 tragen. Die Leiterplatte 2 kann weiterhin Öffnungen 5 für zwei Kabelanschlüsse 6 aufweisen.

Am linksseitigen Bereich 7 der Leiterplatte 2 ist ein erster Schalter 8 mit dem Schaltkreis 1 verbunden, während am rechtsseitigen Bereich 9 der Leiterplatte 2 zwei zweite Schalter 10 mit dem Schaltkreis 1 verbunden sind. Die Anordnung ist natürlich maßlich auf den Schieber 11 und dessen Abdeck- bzw. Öffnungsbereich 12 abgestimmt.

Durch Öffnen des Schiebers 11 wird der Schalter 8 geschlossen, wodurch das Licht für die hintereinander geschalteten Soffitten 4 mit schwacher Helligkeit (low) angeschaltet wird. Die Schalter 10 befinden sich hierbei, wie in Fig. 4 gestrichelt gezeigt, in geöffneter Stellung. Durch weiteres Verschieben des Schiebers 11 in die geöffnete Lage, werden im letzten Bewegungsbereich 13 die Schalter 10 geschlossen, so daß die Schalter 10 die in Fig. 4 mit ausgezogenen Linien dargestellte Lage einnehmen, die Soffitten 4 parallel geschaltet werden und für diese die volle Helligkeit (high) erzielt wird.

Durch Schließen des Schiebers 11 werden die Schalter 10 wieder geöffnet und damit die Helligkeit der Soffitten 4 abgeschwächt. Ein vollständiges Schließen des Schiebers 11 bewirkt auch ein Öffnen des Schalters 8 und damit ein Ausschalten der Lichtquellen.

## Patentansprüche

1. Sonnenblende für Fahrzeuge mit einem Sonnenblendenkörper, einer Ausnehmung in einer Breitseite des Sonnenblendenkörpers, einer in der Ausnehmung angeordneten, mindestens zwei Lichtquellen (4) aufweisenden Beleuchtungseinrichtung, einem die Beleuchtungseinrichtung abdeckenden Spiegel, einem den Spiegel haltenden Rahmen aus lichtdurchlässigem Material, einem Schieber (11) zum Abdecken oder Freigeben des Spiegels und Schaltmitteln (8, 10) zum Ein- oder Ausschalten der Lichtquellen, die durch Verschieben des Schiebers (11) betätigbar sind, dadurch gekennzeichnet, daß zum Ein- und Ausschalten der Lichtquellen (4) erste und zweite Schaltmittel vorgesehen sind, wobei die ersten Schaltmittel aus einem Schalter (8) zum Schließen eines ersten Schaltkreises, bei dem die Lichtquellen (4) hintereinander geschaltet sind, bestehen und die zweiten Schaltmittel aus zwei zusätzlichen Schaltern (10) zum Schließen eines zweiten Schaltkreises, bei dem die Lichtquellen (4) parallel geschaltet sind, bestehen und wobei die Schalter (4, 10) so angeordnet sind, daß durch Verschieben des Schiebers (11) von der den Spiegel abdeckenden in die den Spiegel freigebenden Lage zunächst der erste Schalter (8) betätigbar ist und durch weiteres Verschieben des Schiebers (11) in die den Spiegel freigebende Lage auch die weiteren Schalter (10) betätigbar sind.

## Claims

1. Sun visor for vehicles, having a sun-visor body, a recess in a wide side of the sun-visor body, an illumination device which is arranged in the recess and has at least two light sources (4), a mirror covering the illumination device, a frame made of transparent material which holds the mirror, a slide (11) for covering or releasing the mirror, and switching means (8, 10) for switching the light sources on or off, which switching means can be actuated by displacement of the slide (11), characterized in that, to switch the light sources (4) on and off, first and second switching means are provided, the first switching means comprising a switch (8) to close a first circuit in which the light sources (4) are connected one behind another, and the second switching means comprising two additional switches (10) to close a second circuit in which the light sources (4) are connected in parallel, and the switches (4, 10) being arranged in such a manner that by displacement of the slide (11) from the position covering the mirror into the position releasing the mirror, first of all the first switch (8) can be actuated, and by further displacement of the slide (11) into the position releasing the mirror, the further switches (10) can also be actuated.

## Revendications

1. Pare-soleil pour véhicules avec un corps de pare-soleil, un creux dans une grande face du corps de pare-soleil, un appareil d'éclairage disposé dans le creux et présentant au moins deux sources de lumière (4), un miroir recouvrant l'appareil d'éclairage, un cadre en matière translucide soutenant le miroir, un volet coulissant (11) pour recouvrir ou dégager le miroir et des moyens de commutation (8, 10) pour allumer ou éteindre les sources de lumière, qui peuvent être actionnés en déplaçant le volet coulissant (11), caractérisé en ce qu'il est prévu, pour allumer et éteindre les sources de lumière (4), des premiers et des seconds moyens de commutation, dans lesquels les premiers moyens de commutation se composent d'un interrupteur (8) pour fermer un premier circuit, par lequel les sources de lumière (4) sont raccordées en série, et les seconds moyens de commutation se composent de deux interrupteurs supplémentaires (10) pour fermer un second circuit, par lequel les sources de lumière (4) sont raccordées en parallèle, et dans lesquels les interrupteurs (8, 10) sont disposés d'une façon telle que le premier interrupteur (8) puisse d'abord être actionné en déplaçant le volet coulissant (11) de la position recouvrant le miroir à la position dégageant le miroir et que les autres interrupteurs (10) puissent aussi être actionnés en déplaçant davantage le volet coulissant (11) dans la position dégageant le miroir.
